# EUROPÄISCHE PATENTSCHRIFT

(11) **EP 1 090 520 B1**
(45) Veröffentlichungstag und Bekanntmachung des Hinweises auf die Patenterteilung: **14.06.2006**
(21) Anmeldenummer: 99929018.2
(22) Anmeldetag: 22.04.1999
(51) Int. Cl.: H04Q 7/38

(54) **VERFAHREN UND BASISSTATION ZUR ÜBERTRAGUNG VON ORGANISATIONSINFORMATIONEN IN EINEM FUNK-KOMMUNIKATIONSSYSTEM**
PROCESS AND BASE STATION FOR TRANSMITTING ORGANISATION INFORMATION IN A RADIOCOMMUNICATION SYSTEM
PROCEDE ET STATION DE BASE POUR TRANSMETTRE DES DONNEES D'ORGANISATION DANS UN SYSTEME DE RADIOCOMMUNICATION

(30) Priorität: 22.06.1998 DE 19827700
(43) Veröffentlichungstag der Anmeldung: 11.04.2001
(73) Patentinhaber: SIEMENS AKTIENGESELLSCHAFT, 80333 München (DE)
(72) Erfinder: BOLINTH, Edgar, D-41189 Möchengladbach (DE); SCHWARK, Uwe, D-46399 Bocholt (DE); KAMPERSCHROER, Erich, D-46499 Hamminkeln (DE); KLEIN, Anja, D-10709 Berlin (DE); BENZ, Michael, D-13629 Berlin (DE); ULRICH, Thomas, D-67098 Bad Dürkheim (DE); SITTE, Armin, D-10405 Berlin (DE); KOTTKAMP, Meik, D-81369 München (DE); FÄRBER, Michael, D-82515 Wolfratshausen (DE)
(86) Internationale Anmeldenummer: PCT/DE1999/001219
(87) Internationale Veröffentlichungsnummer: WO 1999/067964

(56) Entgegenhaltungen:
- EP-A- 0 654 916
- DE-C- 19 629 899
- IIZUKA M: "DESIGN OF COMMON ACCESS CHANNELS FOR TDMA-TDD MICROCELL COMMUNICATIONS SYSTEMS" PROCEEDINGS OF THE VEHICULAR TECHNOLOGY CONFERENCE, STOCKHOLM, JUNE 8 - 10, 1994, Bd. 2, Nr. CONF. 44, 8. Juni 1994 (1994-06-08), Seiten 1180-1183, XP000497605 INSTITUTE OF ELECTRICAL AND ELECTRONICS ENGINEERS ISBN: 0-7803-1928-1

## Beschreibung

Die Erfindung betrifft ein Verfahren und eine Basisstation zur Übertragung von Organisations informationen in einem Funk-Kommunikationssystem, insbesondere in einem Mobilfunksystem mit breitbandigen Kanälen, in denen Signale nach einem TDMA/CDMA-Teilnehmerseparierungsverfahren übertragen werden.

In der DE 196 29 899 C ist ein Mobilfunksystem beschrieben, bei dem zwischen einer Basisstation und einer Mobilstation ein bi-direktionaler Logiksteuerkanal LCCH in einem bestimmten Zeitschlitz aufgebaut wird. Stehen nicht mehr genügend Zeitschlitze für zusätzliche Verkehrskanäle zur Verfügung, wird die Aussendung des LCCH's unterdrückt und statt dessen im betreffenden Zeitschlitz eine Verkehrsverbindung aufgebaut. Diese Situation tritt beispielsweise bei einem Soft-Handover auf. Sofern keine zusätzliche Kapazität für Verkehrskanäle benötigt wird, wird grundsätzlich der LCCH in seinem Zeitschlitz übertragen. Die Übertragung des bidirektionalen LCCH erfolgt in einer Punkt-zu-Funkt-Verbindung.

In der EP 0 948 221 A2 ist ein CDMA/TDD-Mobilfunksystem beschrieben, bei dem eine Basisstation eine Zuweisung von Zeitschlitzen mit Organisationsinformationen zu Uplink- und Downlink-Übertragungsrichtung eines Rahmens vornimmt. Die Zuordnung der Anzahl von Zeitschlitzen zu den beiden Übertragungsrichtungen kann manuell oder automatisch in Abhängigkeit der zu übertragenden Informationen geändert werden, wobei jedoch die Anzahl und Position der Zeitschlitze mit Steuerkanälen trotz Änderung der Anzahl der Zeitschlitze pro Übertragungsrichtung konstant bleibt.

In Funk-Kommunikationssystemen werden Informationen (beispielsweise Sprache, Bildinformationen, Internet-Nachrichten oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen wellen erfolgt dabei mit Trägerfrequenzen, die in dem für das jeweilige System vorgesehenen Frequenzband liegen- Für zukünftige Mobilfunksysteme mit CDMA- oder TDMA/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Zur Übertragung von Organisationsinformationen sind verschiedene Verfahren bekannt, die dazu dienen, Mobilstationen in einer Funkzelle einer Basisstation mit den für die Funkzelle nötigen Daten zu versorgen. Organisationsinformationen sind Angaben über die Funkzelle, deren Kanalstruktur und in der Funkzelle verfügbare Dienste und Optionen. Die Organisationsinformationen dienen somit der Mobilstation zur Synchronisation und Auswahl der Funkzelle.

Aus dem GSM-Mobilfunksystem und für zukünftige Mobilfunksystem aus DE 198 10 285 ist es bekannt, pro Rahmen in Abwärtsrichtung einen Zeitschlitz zur Übertragung von Organisationsinformationen vorzusehen. Dazu wird üblicherweise der erste Zeitschlitz des Rahmens herangezogen und die Informationen in Funkblöcken, d.h. burstartig übertragen. Damit liegen feste Abstände zwischen den Aussendungen der Organisationsinformationen vor, die derart geplant sind, daß auch in ungünstigen Verkehrslaststituationen und bei maximal erlaubter Geschwindigkeit der Mobilstationen eine ordnungsgemäße Auswertung der Organisationsinformationen und eine Übergabe der Mobilstationen zwischen verschiedenen Funkzellen unterstützt wird.

Da die Organisationsinformationen üblicherweise mit hoher und konstanter Leistung gesendet werden, stellen sie innerhalb des Funk-Kommunikationssystems eine erhebliche Interferenzquelle dar. Bei zunehmender Dichte des Funk-Kommunikationssystems, beispielsweise durch Klein- und Kleinstzellen, wirken sich die Interferenzen verstärkt aus. Die Übertragungskapazität des Funk-Kommunikationssystems wird negativ beeinflußt.

Der Erfindung liegt die Aufgabe zugrunde, ein Verfahren und eine Basisstation anzugeben, die die Interferenzen innerhalb des Funk-Kommunikationssystems verringern. Diese Aufgabe wird durch das Verfahren mit den Merkmalen des Anspruchs 1 und die Basisstation mit den Merkmalen des Anspruchs 11 gelöst. Vorteilhafte Weiterbildungen sind den Unteransprüchen zu entnehmen.

Erfindungsgemäß ist im Funk-Kommunikationssystem zwar zumindest einer der Zeitschlitze eines Rahmens zur Übertragung von Organisationsinformationen vorgesehen, jedoch wird durch die Basisstation abhängig von einer Änderung der Menge zu übertragender Informationen die Übertragung von Organisationsinformationen zumindest in einem der Rahmen unterdrückt.

Damit sinkt die Anzahl der Aussendungen der Organisationsinformationen pro Zeiteinheit und damit auch die Interferenzen. Eine geringe Menge zu übertragender Informationen bezeichnet Situationen geringer Verkehrslast, also z.B. im Heimbereich mit sehr kleinen Funkzellen und nur wenigen Teilnehmern. Derartige Situationen sind regelmäßig von einer geringen Mobilität bzw. Veränderung der Bedingungen für die Funkschnittstelle zwischen den Mobilstationen und der Basisstation begleitet. In diesen Fällen stellt die erfindungsgemäße Unterdrückung der Übertragung der Organisationsinformationen keine Einschränkung für die Mobilstationen dar. Die Vorteile der Interferenzverringerung überwiegen. Die Informationen können dabei in Funkblöcken, d.h. nach einem zeitdiskontinuierlichen TDMA-Teilnehmerseparierungsverfahren, oder kontinuierlich, z.B. nach CDMA- Teilnehmerseparierungsverfahren übertragen werden.

Nach Ausgestaltungen der Erfindung wird die Menge zu übertragender Informationen bezogen auf durch die Basisstation versorgter Verbindungen oder Mobilstationen bestimmt. Je weniger Mobilstationen sich in der Funkzelle aufhalten bzw. momentan aktiv sind und Informationen senden und empfangen, um so weniger kritisch ist eine ständige Versorgung mit Organisationsinformationen. Die Menge zu übertragender Informationen ändert sich, wenn neue Teilnehmer angemeldet werden bzw. sich Teilnehmer ausbuchen. Ein weiterer Fall ist die Änderung eines Dienstes für bestehende Verbindungen, z.B. beim Umschalten auf einen höherratigen Dienst.

Der Abstand der Rahmen mit Organisationsinformationen wird vorteilhafterweise durch eine Wiederholungsrate bestimmt, die einen Wert größer eins hat. Die Wiederholungsrate kann auf zwei, drei oder größere Werte eingestellt werden. So bleibt zumindest ein Rahmen ohne Organisationsinformationen. Vorteilhafterweise wird die verwendete Wiederholungsrate von der Basisstation zu Mobilstationen signalisiert, so daß in den freiwerdenden Zeitschlitzen auch andere Informationen, z.B. Nutzinformationen, übertragen werden können.

Nach einer alternativen Ausprägung der Erfindung werden die Organisationsinformationen nur auf Anforderung einer Mobilstation übertragen. Eine solche Anforderung wird in Aufwärtsrichtung gesendet, wenn die Mobilstationen funktechnische Ressourcen benutzen will, um selbst zu senden oder eine Verkehrsbeziehung zu einer Basisstation zum Abfragen von Informationen aufzubauen. In der übrigen Zeit kann auf das Senden von Organisationsinformationen verzichtet werden.

Eine besondere Anwendung findet die Erfindung in Funk-Kommunikationssystemen, bei denen innerhalb eines Rahmens ein Umschaltpunkt zwischen Aussendungen der Basisstation und von Mobilstationen vorgesehen ist, so daß die Übertragung der Informationen nach einem TDD-Übertragungsverfahren (TDD time division duplex) erfolgt. Ein solches Funk-Kommunikationssystem ist für den Betrieb von Kleinzellen, z.B. im unlizensierten Heimbereich geeignet, und kann durch die Verschiebung des Umschaltpunktes auch asymmetrische Datendienste, z.B. zur Unterstützung des Internets, bereitstellen ohne funktechnische Ressourcen zu verschwenden. Durch zumindest zeitweilige Unterdrückung der Organisationsinformationen können in den Rahmen mit unterdrückten Organisationsinformationen in allen Zeitschlitzen eines Rahmens Nutzinformationen von der Basisstation übertragen werden. Dadurch steigt die zur Verfügung stehende maximale Datenrate, die im Extremfall in einer Übertragungsrichtung allein genutzt werden kann.

Im folgenden wird die Erfindung anhand von Ausführungsbeispielen bezugnehmend auf zeichnerische Darstellungen näher erläutert.

Dabei zeigen
- Figur 1: ein Blockschaltbild eines Mobilfunksystems,
- Figur 2: eine schematische Darstellung der Rahmenstruktur des TDD-Übertragungsverfahrens,
- Fig 3 - 6: schematische Darstellungen einer veränderbaren Kanalstruktur für Organisationsinformationen,
- Fig 7: eine schematische Darstellung der Übertragung von Organisationsinformationen bei Bedarf,
- Fig 8: ein Ablaufdiagramm der Übertragung von Organisationsinformationen, und
- Fig 9: ein vereinfachtes Blockschaltbild einer Basisstation.

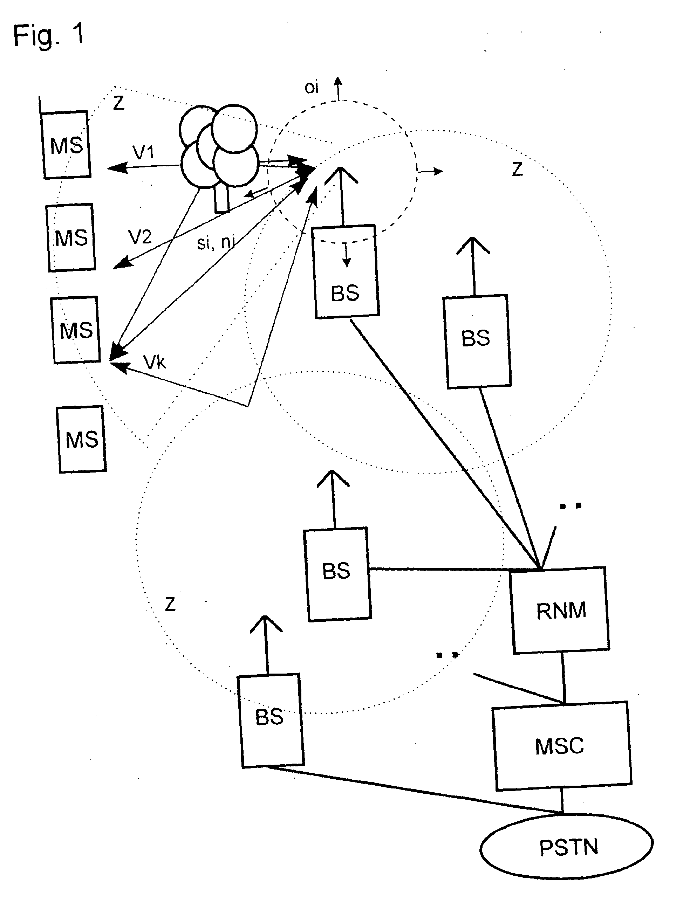

Das in Fig 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle eine Verbindung zu weiteren Funkstationen, z.B. Mobilstationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro installierter Basisstation BS auch mehrere Funkzellen Z versorgt. Die Einrichtung RNM zum Zuteilen von funktechnischen Ressourcen und mehrere Basisstationen BS bilden ein Basisstationssystem.

In Fig 1 sind Verbindungen V, beispielhaft als V1, V2, Vk bezeichnet, zur Übertragung von Nutzinformationen ni und Signalisierungsinformationen si zwischen Mobilstationen MS und einer Basisstation BS dargestellt. Die Übertragung von Organisationsinformationen oi erfolgt an mehrere Mobilstationen MS in Form einer Punkt-zu-Multipunkt-Verbindung.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß. Auch Basisstationen, die als Heimbasisstationen im privatem Bereich eingesetzt sind ohne von der Funknetzplanung betroffen zu sein, können Verbindungen zu Mobilstationen MS aufbauen. Diese Heimbasisstationen sind an ein Festnetz angeschlossen.

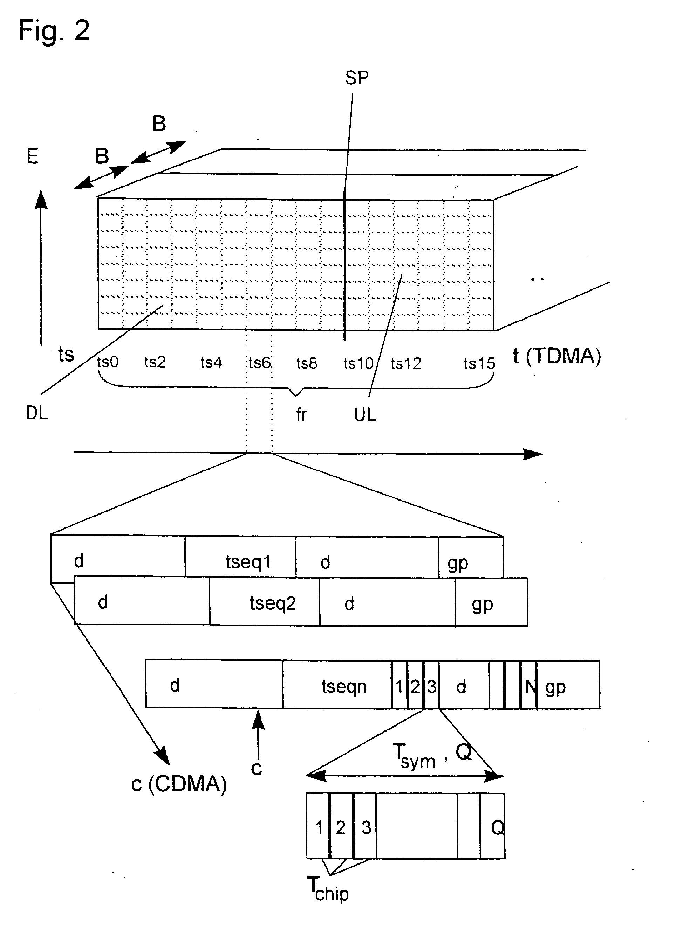

Eine Rahmenstruktur der Funkübertragung ist aus Fig 2 ersichtlich. Gemäß einer TDMA-Komponente ist eine Aufteilung eines breitbandigen Frequenzbereiches, beispielsweise der Bandbreite B = 5 MHz in mehrere Zeitschlitze ts gleicher Zeitdauer, beispielsweise 16 Zeitschlitze ts0 bis ts15 vorgesehen. Ein Teil der Zeitschlitze ts0 bis ts9 werden in Abwärtsrichtung DL und ein Teil der Zeitschlitze ts10 bis ts15 werden in Aufwärtsrichtung UL benutzt. Dazwischen liegt ein Umschaltpunkt SP. Bei diesem TDD-Übertragungsverfahren entspricht das Frequenzband für die Aufwärtsrichtung UL dem Frequenzband für die Abwärtsrichtung DL. Gleiches wiederholt sich für weitere Trägerfrequenzen.

Innerhalb eines Zeitschlitzes, der zur Übertragung von Informationen oi, si, ni vorgesehen ist, werden Informationen mehrerer Verbindungen in Funkblöcken übertragen. Alternative Ausführungsbeispiele sehen eine zeitkontinuierliche Übertragung der Informationen oi, si, ni vor. Die genannten Funkblöcke zur Nutzdatenübertragung bestehen aus Abschnitten mit Daten d, in denen empfangsseitig bekannte Trainingssequenzen tseq1 bis tseqn eingebettet sind. Die Daten d sind verbindungsindividuell mit einer Feinstruktur, einem Teilnehmerkode c, gespreizt, so daß empfangsseitig beispielsweise n Verbindungen durch diese CDMA-Komponente separierbar sind.

Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen Teilnehmerkode c. Weiterhin ist innerhalb des Zeitschlitzes ts eine Schutzzeit gp zur Kompensation unterschiedlicher Signallaufzeiten der Verbindungen vorgesehen.

Innerhalb eines breitbandigen Frequenzbereiches B werden die aufeinanderfolgenden Zeitschlitze ts nach einer Rahmenstruktur gegliedert. So werden 16 Zeitschlitze ts zu einem Rahmen fr zusammengefaßt.

Die verwendeten Parameter der Funkschnittstelle sind vorteilhafterweise:

| | |
|---|---|
| Chiprate: | 4096 Mcps |
| Rahmendauer: | 10 ms |
| Anzahl Zeitschlitze: | 16 |
| Dauer eines Zeitschlitzes: | 625 µs |
| Spreizfaktor: | 16 |
| Modulationsart: | QPSK |
| Bandbreite: | 5 MHz |
| Frequenzwiederholungswert: | 1 |

Diese Parameter ermöglichen eine bestmögliche Harmonisierung mit einem FDD (frequency division duplex) Modus für die 3. Mobilfunkgeneration. Vorteilhafterweise ist der Umschaltpunkt SP innerhalb einer Gruppe von Zellen gleich gewählt.

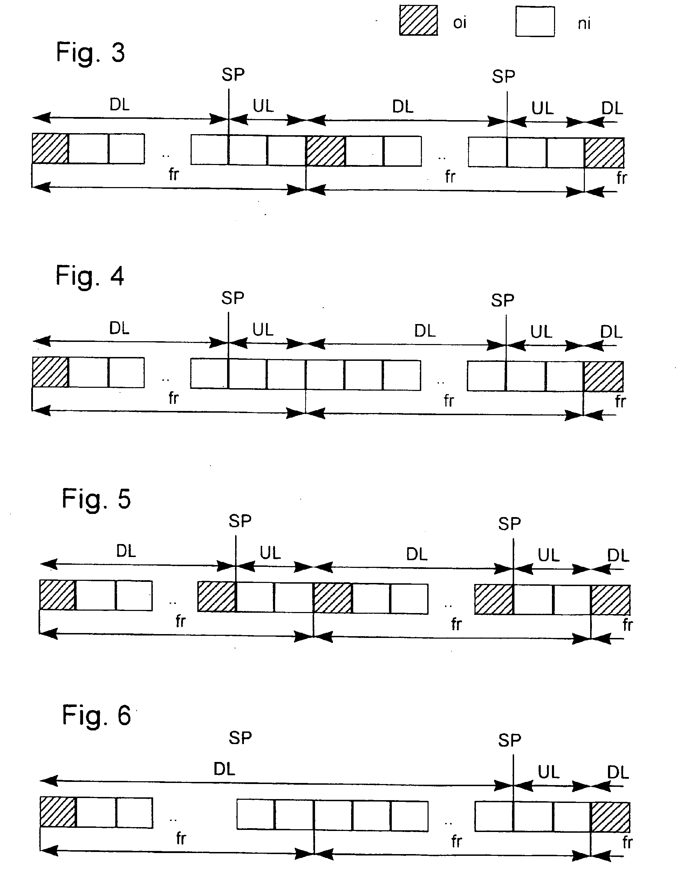

In Fig 3 ist noch einmal die bekannte Rahmenstruktur gezeigt, wobei im ersten Zeitschlitz eines Rahmens jeweils Organisationsinformationen oi übertragen werden. In den übrigen Zeitschlitzen werden Nutzinfomationen ni in Auf- UL oder Abwärtsrichtung DL übertragen. Erfindungsgemäß wird von diesem starren Schema entsprechend der Rahmenstrukturen nach den Fig 4 bis 6 abgewichen, wobei das Unterdrücken der Übertragung von Organisationsinformationen oi abhängig von einer Änderung der Menge zu übertragender Informationen oi, si, ni ist.

Nach Fig 4 bleibt die Aufteilung des Rahmens fr in Auf- UL und Abwärtsrichtung DL erhalten, jedoch wird nur in jedem zweiten Rahmen fr ein Zeitschlitz zum Senden der Organisationsinformationen oi benutzt. Eine Wiederholungsrate rr ist in diesem Fall gleich zwei. Es kann wahlweise auch eine Wiederholungsrate rr von drei oder vier gewählt werden. Die durch das Senden der Organisationsinformationen oi, die mit hoher und fest vorgebener Leistung gesendet werden müssen, hervorgerufenen Interferenzen werden auf einen Wert, der proportional dem Kehrwert der Wiederholungsrate rr ist, reduziert.

In Fig 5 ist gezeigt, daß die Wiederholungsrate rr auch kleiner eins sein kann, d.h. pro Rahmen fr auch mehrmals Organisationsinformationen oi übertragen werden können. Dies erfolgt im ersten und letzten Zeitschlitz eines Teils des Rahmens fr, der für die Abwärtsrichtung DL vorgesehen ist. Diese kleine Wiederholungsrate rr ist insbesondere in Funkzellen mit schnellen Veränderungen der Übertragungsbedingungen für die Mobilstationen MS und vielen Übergaben (handover).zu Nachbarzellen vorteilhaft.

Auch Fig 6 ist ein Beispiel für eine Wiederholungsrate rr von zwei, wobei zusätzlich die Aufteilung in Auf- UL und Abwärtsrichtung DL zumindest für einige Rahmen fr aufgehoben wurde. Um beispielsweise in Abwärtsrichtung DL sehr große Datenraten zu erzielen, wird ein kompletter Rahmen fr zur Übertragung in Abwärtsrichtung DL reserviert; es werden Organisations- oi und Nutzinformationen ni nur in eine Übertragungsrichtung gesendet. Der Umschaltpunkt SP innerhalb des Rahmens fr entfällt. Somit kann auch eine extrem asymmetrische Informationsübertragung unterstützt werden, die beispielsweise bei Internet-Anwendungen benötigt wird.

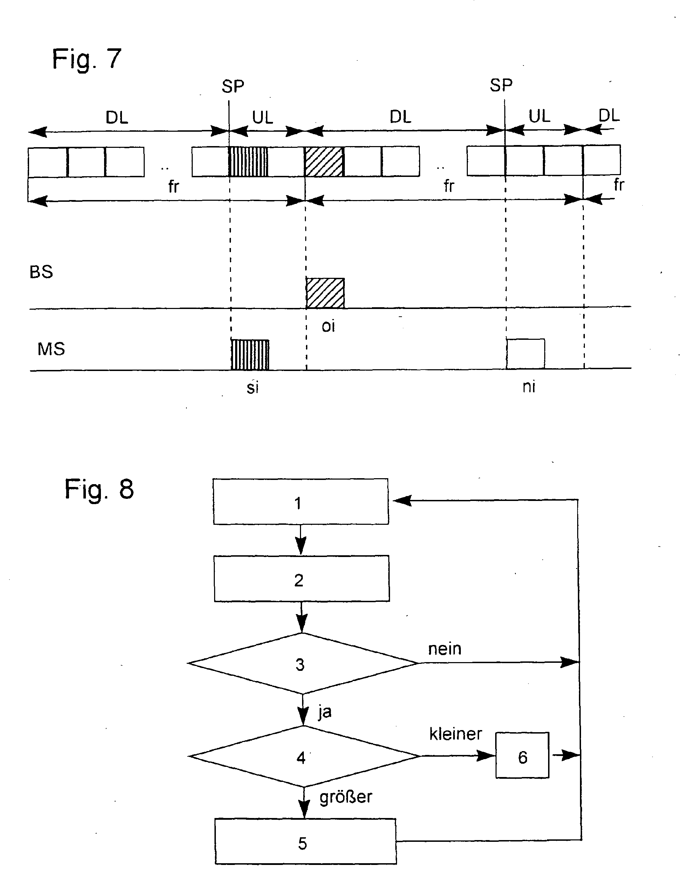

Fig 7 zeigt einen Fall, bei dem die Übertragung der Organisationsinformationen oi unmittelbar von der Menge zu übertragender Informationen oi, si, ni abhängt. Es wird die Situation dargestellt, daß im Heimbereich einer Basisstation BS nur eine Mobilstation MS zugeordnet ist. Zu dieser Mobilstation MS ist momentan keine Verbindung aufgebaut. Im ersten dargestellten Rahmen fr werden keine Organisationsinformationen oi übertragen. Da keinerlei Funkverkehr zwischen Basisstation BS und Mobilstation MS vorliegt, treten für benachbarte Funkzellen keine Interferenzen auf.

Möchte jedoch der Teilnehmer, dem die Mobilstation MS zugeordnet ist, eine Verbindung herstellen, so fordert die Mobilstation MS mittels eines Funkblocks, der Signalisierungsinformationen si enthält, in einem Zeitschlitz des zweiten Rahmens fr die Basisstation BS auf, die Organisationsinformationen oi zu übertragen. Dies geschieht im darauffolgenden Rahmen fr. Die Mobilstation MS kann sich auf die Organisationsinformationen oi synchronisieren und daraufhin Nutzinformationen ni in Aufwärtsrichtung UL senden.

Im Ausführungsbeispiel nach Fig 7 erfolgt das Senden der Organisationsinformationen oi nur bei Bedarf. Die physikalische Übertragung eines hochfrequenten Signals in einem Zeitschlitz erfolgt nur, wenn zuvor eine Mobilstation MS eine derartige Aufforderung, z.B. ein Zugriffsblock (access burst) gesendet hat bzw. ein Zeitgeber abgelaufen ist, der anzeigt, daß eine bestimmte Zeitdauer keine Organisationsinformationen oi übertragen wurden.

Dieses Verfahren eignet sich in Funk-Kommunikationssystemen mit einer Vielzahl unkoordinierter Basisstationen BS, bei denen die insgesamt abgestrahlte Sendeleistung deutlich verringert wird und damit die Interferenzen für Basis- und Mobilstationen in Nachbarzellen sinken. Die Interferenzreduzierung ist besonders wichtig für Funk-Kommunikationssysteme mit kleinen Frequenzwiederholungswerten, z.B. einem Frequenzwiederholungswert von eins. Weiterhin ist bei einem TDD-Übertragungsverfahren, bei dem der Verkehr in Auf- UL und Abwärtsrichtung DL im gleichen Frequenzband B anfällt, ggf. mit variablen Umschaltpunkt SP von Funkzelle zu Funkzelle, die Interferenzreduzierung besonders bedeutsam.

Die erfindungsgemäße Übertragung von Organisationsinformationen oi, die zur Interferenzreduzierung beiträgt, ist in Fig 8 schematisch dargestellt. In einem ersten Schritt wird der Übertragung von Informationen oi, si, ni mittels eines TDMA/CDMA-Teilnehmerseparierungsverfahrens durchgeführt. In einem zweiten Schritt ermittelt die Basisstation BS oder eine andere netzseitige Einrichtung die Menge der zu übertragenden Informationen oi, si, ni und deren Änderung, d.h. ein Ein- oder Ausbuchen von Mobilstationen MS oder eine Änderung in den unterstützten Diensten. Dies erfolgt für die Aufwärtsrichtung UL - Fig 7 - bzw. für die Auf- und Abwärtsrichtungen UL, DL - Fig 4 bis 6.

In einem dritten Schritt wird die Menge der zu übertragenden Informationen oi, si, ni mit einem Schwellwert verglichen. Dabei können als die Menge repräsentierende Größen die Anzahl zu versorgender Verbindungen V oder Mobilstationen MS, die zu übertragende Datenrate oder - siehe Fig 7 - als kleinste Einheit eine Anforderung zur Ressourcenzuteilung benutzt werden.

Wird der Schwellwert nicht überschritten, so wird die Informationsübertragung mit dem gleichen Wiederholungsrate rr der Organisationsinformationen oi fortgesetzt.

Ist der Schwellwert überschritten, so wird in einem vierten Schritt abgefragt, ob die Menge zu übertragenden Informationen oi, si, ni sich erhöht oder verringt. Soll eine größere Informationsmenge übertragen werden, so wird in einem fünften Schritt die Wiederholungsrate rr verringt, ansonsten in einem sechsten Schritt die Wiederholungsrate rr erhöht. Mit der durch die Wiederholungsrate rr festgelegten Struktur der Übertragung der Organisationsinformationen oi wird die Informationsübertragung fortgesetzt.

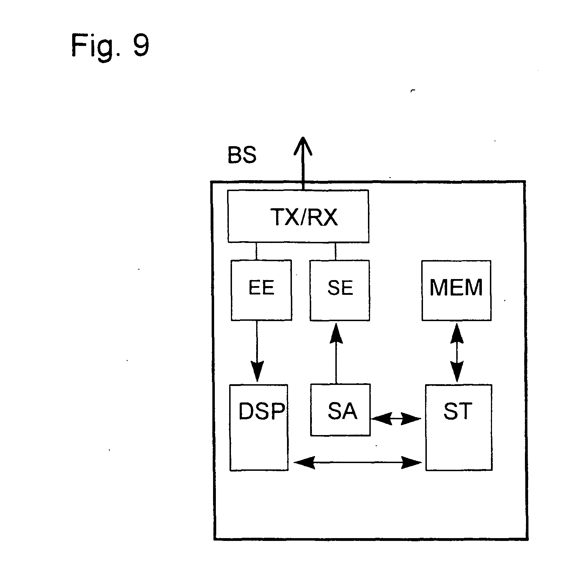

Die Informationsübertragung wird in einer Basisstation BS nach Fig 9 durchgeführt, wobei die Administrierung des Umschaltpunktes SP und Angaben für die angebotenen Dienste durch das Organisations- und Wartungszentrum OMC beeinflußt und die Vorgaben der Einrichtung RNM zur Zuteilung funktechnischer Ressourcen beachtet werden. Die Basisstation BS enthält einen Sende/Empfangsteil TX/RX zur hochfrequenten Verarbeitung von Sende- und Empfangssignalen.

Weiterhin sind eine Sendeeinrichtung SE und einem Empfangseinrichtung EE mit dem Sende/Empfangsteil TX/RX verbunden. In der Sendeeinrichtung SE werden die Signale digital/analog wandelt, vom Basisband in den Frequenzbereich der Abstahlung umsetzt und die Sendesignale moduliert. Eine Signalaufbereitungseinrichtung SA hat zuvor die zu übertragenden Informationen oi, si, ni in Funkblöcken zusammengestellt und dem entsprechenden Frequenzband und Zeitschlitz zugeordnet. Eine Signalverarbeitungseinrichtung DSP wertet über die Empfangseinrichtung EE korrespondierend zur Sendeeinrichtung SE verarbeiteten Signale aus und führt eine Kanalschätzung und eine Datendetektion durch.

Das Zusammenwirken der Komponenten, die Einstellung des Umschaltpunkts SP und die Zuordnung der Organisationsinformationen oi zu den Zeitschlitzen wird durch eine Steuereinrichtung ST gesteuert. Zugehörige Daten über den Sende- und den Umschaltpunkt SP, die konkreten Gegebenheiten der Verbindungen und das Schema der Übertragung der Organisationsinformationen oi werden in einer Speichereinrichtung MEM gespeichert. Entsprechend der Menge zu übertragender Informationen oi, si, ni wird das Schema aktualisiert.

## Patentansprüche

1. Verfahren zur Übertragung von Organisationsinformationen (oi) in einem Funk-Kommunikationssytem, bei dem von einer Basisstation (BS) Informationen (ni, oi) innerhalb von Zeitschlitzen (ts) an mehrere Mobilstationen (MS) gesendet werden, wobei mehrere Zeitschlitze (ts) einen Rahmen (fr) bilden und zumindest einer der Zeitschlitze (ts) des Rahmens (fr) zur Übertragung von Organisationsinformationen (oi) vorgesehen ist,
**dadurch gekennzeichnet,**
**dass** der Abstand der Rahmen (fr) mit Organisationsinformationen (oi) durch eine einstellbare Wiederholungsrate (rr) bestimmt wird, wobei die Wiederholungsrate (rr) abhängig von einer Änderung der Menge zu übertragender Informationen (ni, oi) eingestellt wird.

2. Verfahren nach Anspruch 1,
**dadurch gekennzeichnet,**
**dass** die Übertragung der Organisationsinformationen (oi) in einem Rahmen nur bei Bedarf erfolgt.

3. Verfahren nach einem der vorstehenden Ansprüche,
**dadurch gekennzeichnet,**
**dass** die Organisations informationen (oi) zur Synchronisation der Mobilstation und Auswahl der Funkzelle dienen.

4. Verfahren nach einem der vorstehenden Ansprüche,
**dadurch gekennzeichnet,**
**dass** die Organisationsinformationen (oi) Angaben über die Funkzelle, deren Kanalstruktur und in der Funkzelle verfügbare Dienste und Optionen enthalten.

5. Verfahren nach einem der vorstehenden Ansprüche,
**dadurch gekennzeichnet,**
**dass** die Menge zu übertragender Informationen (ni, oi) bezogen auf durch die Basisstation (BS) versorgter Verbindungen (V) oder Dienste bestimmt wird.

6. Verfahren nach einem der vorstehenden Ansprüche,
**dadurch gekennzeichnet,**
**dass** die Menge zu übertragender Informationen (ni, oi) bezogen auf durch die Basisstation (BS) versorgter Mobilstationen (MS) bestimmt wird.

7. Verfahren nach einem der vorstehenden Ansprüche,
**dadurch gekennzeichnet,**
**dass** die verwendete Wiederholungsrate (rr) von der Basisstation (BS) zu Mobilstationen (MS) signalisiert wird.

8. Verfahren nach einem der vorherigen Ansprüche,
**dadurch gekennzeichnet,**
**dass** Organisationsinformationen (oi) nur auf Anforderung einer Mobilstation (MS) bezüglich zu übertragender Informationen (ni, si) übertragen werden.

9. Verfahren nach einem der vorherigen Ansprüche,
**dadurch gekennzeichnet,**
**dass** in den Rahmen (fr), in denen keine Organisationsinformationen (oi) übertragen werden, in den für die Organisationsinformationen (oi) vorgesehenen Zeitschlitzen (ts) Nutzinformationen (ni) übertragen werden.

10. Verfahren nach nach einem der vorherigen Ansprüche,
**dadurch gekennzeichnet,**
**daß** innerhalb eines Rahmens (fr) ein Umschaltpunkt (SP) zwischen Aussendungen der Basisstation (BS) und von Mobilstationen (MS) vorgesehen ist, so daß die Übertragung der Informationen (ni, oi) nach einem TDD-Übertragungsverfahren erfolgt.

11. Verfahren nach einem der vorherigen Ansprüche,
**dadurch gekennzeichnet,**
**dass** in den Rahmen (fr), in denen keine Organisationsinformationen übertragen werden, in allen Zeitschlitzen (ts) eines Rahmens Nutzinformationen (ni) von der Basisstation übertragen werden.

12. Basisstation (BS) für ein Funk-Kominunikationssystem, mit einer Signalaufbereitungseinrichtung (SA) zum Formen von Sendesiglalen für zu übertragende Informationen (ni, oi), mit einer Sendeeinrichtung (SE) zum Senden der Sendesignale innerhalb von Zeitschlitzen (ts), wobei mehrere Zeitschlitze (ts) einen Rahmen (fr) bilden und zumindest einer der Zeitschlitze (ts) des Rahmens (fr) zur Übertragung von Organisationsinformationen (oi) vorgesehen ist,
**dadurch gekennzeichnet,**
**dass** sie eine Steuereinrichtung (ST) aufweist zur Einstellung einer den Abstand der Rahmen (fr) mit Organisationsinformationen (oi) bestimmenden Wiederholungsrate (rr) abhängig von einer Änderung der Menge zu übertragender Informationen (ni, si, oi).

## Claims

1. Method for the transmission of organization information items (oi) in a radio communications system, in which information items (ni, oi) are transmitted from a base station (BS) within time slots (ts) to a plurality of mobile stations (MS), a plurality of time slots (ts) forming a frame (fr) and at least one of the time slots (ts) of the frame (fr) being provided for the transmission of organization information items (oi),
**characterized**
**in that** the spacing of the frames (fr) having organization information items (oi) is determined by a repetition rate (rr) which can be set, the repetition rate (rr) being set depending on a change in the quantity of information items (ni, oi) to be transmitted.

2. Method according to Claim 1, **characterized in that** the organization information items (oi) are transmitted in a frame only when required.

3. Method according to one of the preceding claims, **characterized in that** the organization information items (oi) are used for the synchronization of the mobile station and selection of the radio cell.

4. Method according to one of the preceding claims, **characterized in that** the organization information items (oi) contain details regarding the radio cell, the channel structure thereof and services and options which are available in the radio cell.

5. Method according to one of the preceding claims, **characterized in that** the quantity of information items (ni, oi) to be transmitted is determined relative to services or connections (V) supplied by the base station (BS) .

6. Method according to one of the preceding claims, **characterized in that** the quantity of information items (ni, oi) to be transmitted is determined relative to mobile stations (MS) supplied by the base station (BS).

7. Method according to one of the preceding claims, **characterized in that** the repetition rate (rr) used is signalled to mobile stations (MS) by the base station (BS).

8. Method according to one of the preceding claims, **characterized in that** organization information items (oi) are transmitted only upon request by a mobile station (MS) with regard to information items (ni, si) to be transmitted.

9. Method according to one of the preceding claims, **characterized in that** useful information items (ni) are transmitted in the frames (fr) in which no organization information items (oi) are transmitted, in the time slots (ts) provided for the organization information items (oi).

10. Method according to one of the preceding claims, **characterized in that** a switching point (SP) between transmissions of the base station (BS) and from mobile stations (MS) is provided within a frame (fr), with the result that the information items (ni, oi) are transmitted according to a TDD transmission method.

11. Method according to one of the preceding claims, **characterized in that** useful information items (ni) are transmitted from the base station in the frames (fr) in which no organization information items are transmitted, in all time slots (ts) of a frame.

12. Base station (BS) for a radio communications system, having a signal conditioning device (SA) for shaping transmission signals for information items (ni, oi) to be transmitted, having a transmitting device (SE) for transmitting the transmission signals within time slots (ts), a plurality of time slots (ts) forming a frame (fr) and at least one of the time slots (ts) of the frame (fr) being provided for the transmission of organization information items (oi),
**characterized**
**in that** it has a control device (ST)for setting a repetition rate (rr) which determines the spacing of the frames (fr) having organization information items (oi) depending on a change in the quantity of information items (ni, si, oi) to be transmitted.

## Revendications

1. Procédé pour transmettre des informations d'organisation (oi) dans un système de radiocommunication, dans lequel des informations (ni, oi) sont envoyées à plusieurs stations mobiles (MS) par une station de base (BS) à l'intérieur d'intervalles de temps (ts), plusieurs intervalles de temps (ts) formant une trame (fr) et au moins un des intervalles de temps (ts) de la trame (fr) étant prévu pour la transmission d'informations d'organisation (oi),
**caractérisé en ce que**
l'intervalle entre les trames (fr) contenant des informations d'organisation (oi) est déterminé par une fréquence de répétition (rr) réglable, la fréquence de répétition (rr) étant réglée en fonction d'un changement de la quantité d'informations (ni, oi) à transmettre.

2. Procédé selon la revendication 1,
**caractérisé en ce que**
la transmission des informations d'organisation (oi) dans une trame ne s'effectue qu'en cas de besoin.

3. Procédé selon l'une des revendications précédentes,
**caractérisé en ce que**
les informations d'organisation (oi) servent à la synchronisation de la station mobile et à la sélection de la cellule radio.

4. Procédé selon l'une des revendications précédentes,
**caractérisé en ce que**
les informations d'organisation (oi) contiennent des données sur la cellule radio, sa structure de canal et les services et options disponibles dans la cellule radio.

5. Procédé selon l'une des revendications précédentes,
**caractérisé en ce que**
la quantité d'informations (ni, oi) à transmettre est déterminée par rapport à des liaisons (V) ou services couverts par la station de base (BS).

6. Procédé selon l'une des revendications précédentes,
**caractérisé en ce que**
la quantité d'informations à transmettre (ni, oi) est déterminée par rapport aux stations mobiles (MS) couvertes par la station de base (BS).

7. Procédé selon l'une des revendications précédentes,
**caractérisé en ce que**
la fréquence de répétition (rr) utilisée est signalée aux stations mobiles (MS) par la station de base (BS).

8. Procédé selon l'une des revendications précédentes,
**caractérisé en ce que**
des informations d'organisation (oi) ne sont transmises que sur demande d'une station mobile (MS) concernant des informations (ni, si) à transmettre.

9. Procédé selon l'une des revendications précédentes,
**caractérisé en ce que**,
dans les trames (fr) dans lesquelles aucune information d'organisation (oi) n'est transmise, des informations utiles (ni) sont transmises dans les intervalles de temps (ts) prévus pour les informations d'organisation (oi).

10. Procédé selon l'une des revendications précédentes,
**caractérisé en ce qu'**
un point de commutation (SP) est prévu, à l'intérieur d'une trame (fr), entre les émissions de la station de base (BS) et celles des stations mobiles (MS), de manière à ce que la transmission des informations (ni, oi) s'effectue selon un procédé de transmission TDD.

11. Procédé selon l'une des revendications précédentes,
**caractérisé en ce que**,
dans les trames (fr) dans lesquelles aucune information d'organisation n'est transmise, des informations utiles (ni) sont transmises par la station de base dans tous les intervalles de temps (ts) d'une trame.

12. Station de base (BS) pour un système de radiocommunication, comprenant un dispositif de préparation de signaux (SA) pour former des signaux d'émission pour des informations (ni, oi) à transmettre, un dispositif émetteur (SE) pour émettre les signaux d'émission à l'intérieur d'intervalles de temps (ts), plusieurs intervalles de temps (ts) formant une trame (fr) et au moins un des intervalles de temps (ts) de la trame (fr) étant prévu pour la transmission d'informations d'organisation (oi),
**caractérisé en ce que**
la station de base est pourvue d'un dispositif de commande (ST) pour régler une fréquence de répétition (rr) déterminant l'intervalle entre les trames (fr) contenant des informations d'organisation (oi) en fonction d'un changement de la quantité d'informations (ni, si, oi) à transmettre.
